Europäisches Patentamt

European Patent Office

Office européen des brevets

(19)

(11) Numéro de publication: **0 199 953**
**B1**

(12) # FASCICULE DE BREVET EUROPEEN

(45) Date de publication du fascicule du brevet:
20.09.89

(51) Int. Cl.⁴: **A47J 31/40**, G07F 13/10,
G07F 11/58

(21) Numéro de dépôt: 86103526.9

(22) Date de dépôt: 15.03.86

(54) **Appareil pour la confection automatique d'une boisson.**

(30) Priorité: 30.04.85  CH 1828/85

(43) Date de publication de la demande:
10.12.86 Bulletin 86/45

(45) Mention de la délivrance du brevet:
20.09.89 Bulletin 89/38

(84) Etats contractants désignés:
AT BE CH DE FR GB IT LI LU NL SE

(56) Documents cités:
CH-A- 471 570
DE-C- 544 332
FR-A- 2 140 619
FR-A- 2 160 635
GB-A- 1 546 312
US-A- 2 243 895
US-A- 2 952 202
US-A- 3 185 280
US-A- 3 227 501
US-A- 3 295 998

(73) Titulaire: SOCIETE DES PRODUITS NESTLE S.A., Case
postale 353, CH-1800 Vevey(CH)

(72) Inventeur: Aliesch, Robert, Im mittleren Saedel,
CH-8498 Gibswil(CH)
Inventeur: Germann, Karl, Pré des Planches 7,
CH-1807 Blonay(CH)

ACTORUM AG

## Description

L'invention concerne un appareil pour la confection automatique d'une boisson à partir d'une cartouche contenant le produit à extraire, comportant une pompe pour amener un liquide, un système de chauffage dudit liquide, un mécanisme d'extraction, au moins un ensemble de magasins prévus pour loger les cartouches à extraire, lesdites cartouches étant déplaçables dans lesdits magasins, au moins une bande transporteuse agencée de manière à faire avancer la cartouche choisie pour la positionner.

On connaît et on utilise depuis longtemps surtout dans la restauration et les débits de boisson des machines dites "espresso" permettant d'extraire du café grâce à un système d'injection d'eau chaude sous pression sur un lit de café tassé. Ces machines nécessitent plusieurs manipulations de la part de la personne concernée: choix du type de café, surveillance de la régularité de la mouture du café utilisé, dosage du café, formation d'un lit de café tassé de manière uniforme de sorte que l'extraction soit aussi régulière que possible.

Ce soin dans la préparation notamment du dosage du café est indispensable pour assurer une bonne qualité de la boisson. Avec une telle machine, on ne peut cependant pas exclure des irrégularités dans la qualité du café servi. En outre, après chaque café obtenu, il y a lieu de vider le lit de café extrait, de laver la capsule et ensuite de la remplir à nouveau et de tasser le lit de café avant de placer l'ensemble pour y injecter l'eau chaude et préparer ainsi une nouvelle boisson. Finalement, on peut aussi dire qu'avec une telle machine, on ne peut pas envisager que le consommateur puisse se servir lui-même.

Le brevet FR-A 2 140 619 concerne déjà un dispositif de préparation automatique de boissons à base de café comportant des magasins dans lesquels sont stockés les emballages de café à extraire, une gouttière inclinée pour chaque magasin, un chemin de transport, un poste de poinçonnage et un poste de percolation. Dans ce système, l'agencement relatif de tous les éléments ne permet pas de mettre au point une machine à café sûre, efficace et de conception simple. Le brevet US-A 2 243 895 concerne une machine pour faire des boissons à base de café ou autres, comportant un réservoir d'eau, un magasin pour des cartouches et une roue à quatre positions pour lesdites cartouches. Cet ancien dispositif ne permet aucun automatisme pour préparer des boissons.

La présente invention permet de disposer d'un appareil propre, grâce à un système de cartouches fermées, contenant déjà des doses de café de bonne qualité, en ce qui concerne le type de café, la mouture, le dosage et la présentation du lit de café, d'un appareil ne nécessitant pratiquement aucune manipulation de la part de l'utilisateur et que le consommateur peut, s'il le désire, utiliser lui-même.

La présente invention concernant un appareil pour la confection automatique d'une boisson conforme au préambule de la revendication 1 est caractérisée en ce que chaque magasin est muni de glissières entre lesquelles sont disposées les cartouches à extraire, celles-ci étant librement déplaçables en translation le long des glissières, ladite bande transporteuse étant disposée sous un magasin et en contact avec les cartouches dudit magasin, de manière à faire avancer celles-ci et en ce que l'appareil comprend au moins un carrousel coopérant avec et disposé devant ledit magasin et ladite bande transporteuse et constitué par une roue à trois logements correspondant aux trois positions de la cartouche à extraire, à savoir son positionnement, son extraction et son éjection, ladite cartouche coopérant dans sa seconde position avec le mécanisme d'extraction pour délivrer la boisson dans un récipient disposé en dessous.

Les cartouches utilisées sont par exemple celles objet du brevet CH-A 605 293, mais on peut également en utiliser d'autres en adaptant éventuellement les parties concernées de la machine. La fonction de la bande transporteuse est de positionner correctement la cartouche à extraire depuis le magasin à glissière jusque dans le carrousel. Les magasins à glissières ne sont pas critiques et peuvent être de tout type connu. Ils sont de préférence horizontaux et mobiles à translation verticale grâce à un système à chaînes sans fin. La bande transporteuse est de préférence à translation horizontale et disposée sous le magasin le plus bas de l'ensemble de magasins. Le carrousel amenant les cartouches du lieu de positionnement à l'extraction et à l'éjection tourne autour d'un axe vertical.

La pompe amène l'eau dont la quantité est préréglable compte tenu du volume des tasses qu'on utilise ou compte tenu de la concentration du café qu'on souhaite obtenir par l'intermédiaire d'un conduit souple dans le système de de chauffage. Ce système est solidaire du mécanisme d'extraction et déplaçable en translation verticale grâce à un cylindre à piston. Un débitmètre disposé entre la pompe et le système de chauffage permet le préréglage de la quantité d'eau.

Le système de chauffage est un système à chauffage continu, dont on peut prérégler la température de liquide à chauffer.

L'ensemble de magasins comporte une pluralité de cartouches à extraire. Lorsque les magasins sont vides, on les charge grâce à une fenêtre de chargement prévue à la partie supérieure du dispositif.

Lorsqu'on sélectionne le type de café souhaité, l'ensemble de magasins se déplace verticalement jusqu'à ce que le magasin dont on souhaite extraire la cartouche se trouve en position basse. Pour que ce magasin soit correctement positionné, il est prévu sur chaque magasin une roue de positionnement qui vient se loger dans un logement correspondant d'une came de positionnement montée sur ressort et solidaire de la bande transporteuse. Ce n'est que lorsque le magasin inférieur est bien positionné que la bande transporteuse se met en route.

L'appareil selon l'invention peut comporter un seul ensemble de magasins. Cependant pour les utilisations dans des restaurants et autres, on prévoit de préférence entre 2 et 6 ensembles de magasins ainsi que le nombre correspondant de bandes transporteuses et de carrousels, coopérant avec lesdits ensembles de magasins. On a ainsi un dispositif très performant permettant d'obtenir un café très régulier et de bonne qualité. L'appareil selon l'invention étant à concept modulaire, le nombre d'ensembles de magasins n'est pas critique.

La suite de la description est faite en référence aux dessins sur lesquels:

Fig 1 est une vue en perspective d'un mode de réalisation de l'appareil selon l'invention avec deux ensembles de magasins;
Fig 2 est une coupe de la moitié droite de l'appareil de la figure 1 selon AA
Fig 3 est une coupe de la moitié gauche de l'appareil de la figure 1 selon BB et
Fig 4 est une représentation schématique de la bande transporteuse pour le positionnement de la cartouche à extraire.

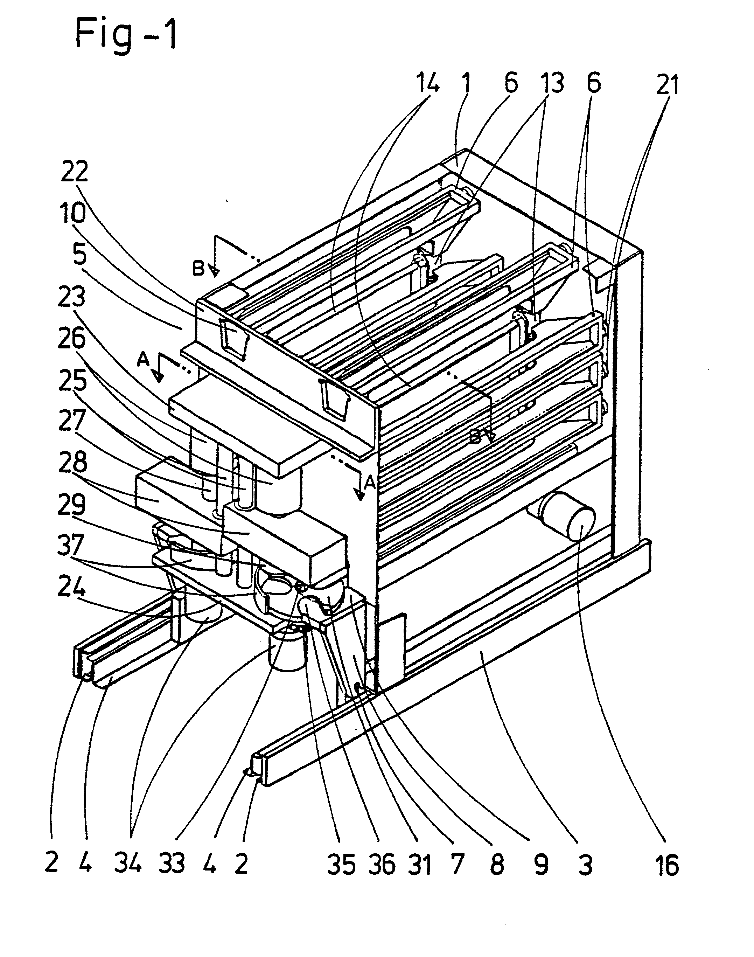

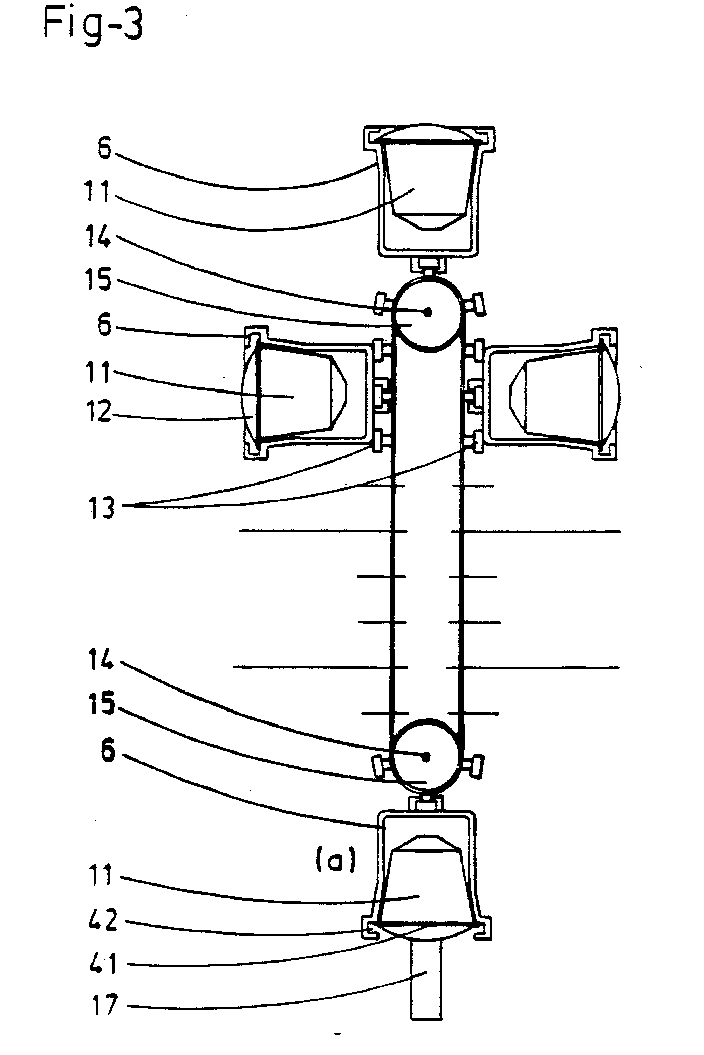

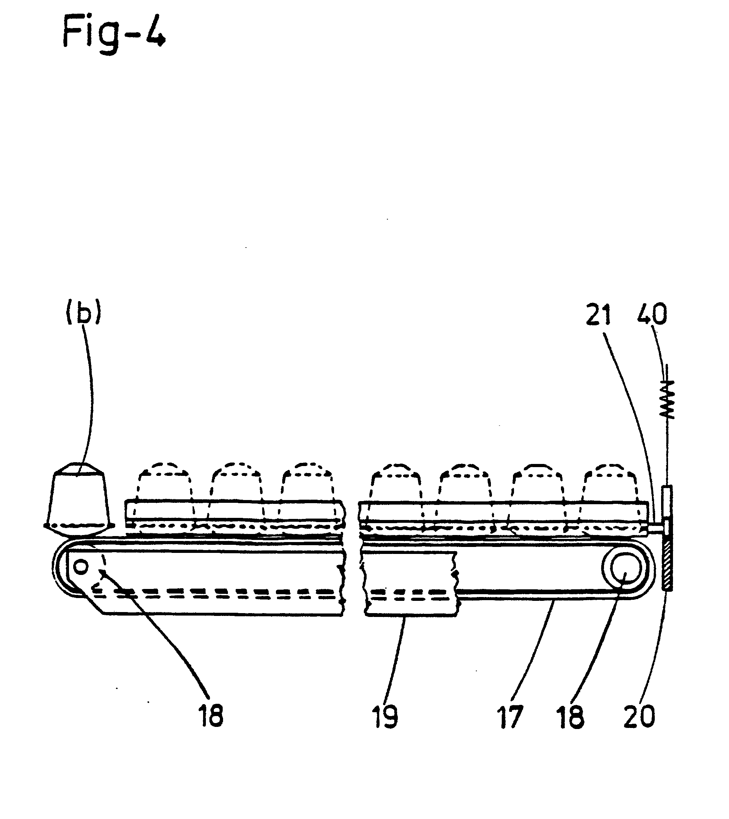

L'appareil est disposé dans un bâti (1) monté sur des rails (2) qui sont solidaires d'un support (3). Le bâti (1) coulisse grâce à ses rails propres (4). L'appareil dans son bâti comprend une partie frontale (5) et une partie comportant les deux ensembles de magasins (6). L'ensemble du dispositif est prévu à coulissement pour des raisons pratiques lors de l'entretien du dispositif. Il est même prévu que la partie frontale (5) puisse être dégagée et remplacée; on la fait alors pivoter autour de l'axe (7). A cet effet, la pièce (8) qui est solidaire du plateau (9) comporte un logement pour s'engager sur ledit axe 7. Dans le mode de réalisation de la figure 1, le dispositif comporte huit magasins à glissière (6) (fig 3). On charge par la partie frontale selon les fenêtres (10) les cartouches (11) qu'on souhaite extraire. Ces cartouches sont par exemple celles objet du brevet CH 605 293, mais il est bien entendu qu'on peut également en utiliser d'autres. Il suffit alors de prévoir le magasin adéquat. Selon la figure 1, chaque magasins peut recevoir 10 cartouches; on peut donc charger 80 cartouches par ensemble de magasins et 160 cartouches au total. L'ensemble de magasins (6) est solidaire d'une chaîne sans fin (13) sur la partie avant, c'est-à-dire directement derrière la partie frontale (5), et une chaîne identique sur la partie arrière. Les deux chaînes (13) sont reliées par deux arbres (14). Ces chaînes sont actionnées dans un mouvement vertical par un moteur (non représenté) et elles tournent autour de roues (15) (fig 3). La partie arrière du dispositif comporte encore la pompe (16) pour amener l'eau sur la partie frontale et une bande transporteuse (17) pour l'avancement et le positionnement de la cartouche à extraire. Cette bande transporteuse est montée (fig 4) sur deux poulies (18) qui sont solidaires par l'intermédiaire d'une tige (19) d'une came de positionnement (20) dont la fonction sera explicitée plus loin. Chaque magasin comporte en outre sur sa partie arrière une roue (21) de positionnement correct venant se loger lors du fonctionnement dans un logement correspondant de la came (29) précitée./

La partie frontale (5) comprend un panneau vertical (22) qui porte des plateaux (23) et (24) entre lesquels sont montés des guides (25) qui eux-mêmes portent un cylindre (26) et un piston (27) servant au déplacement du système de chauffage (28) et du mécanisme d'extraction (29). Le guide (25) comporte également un ressort (30) contre lequel va buter le système de chauffage lors de sa descente.

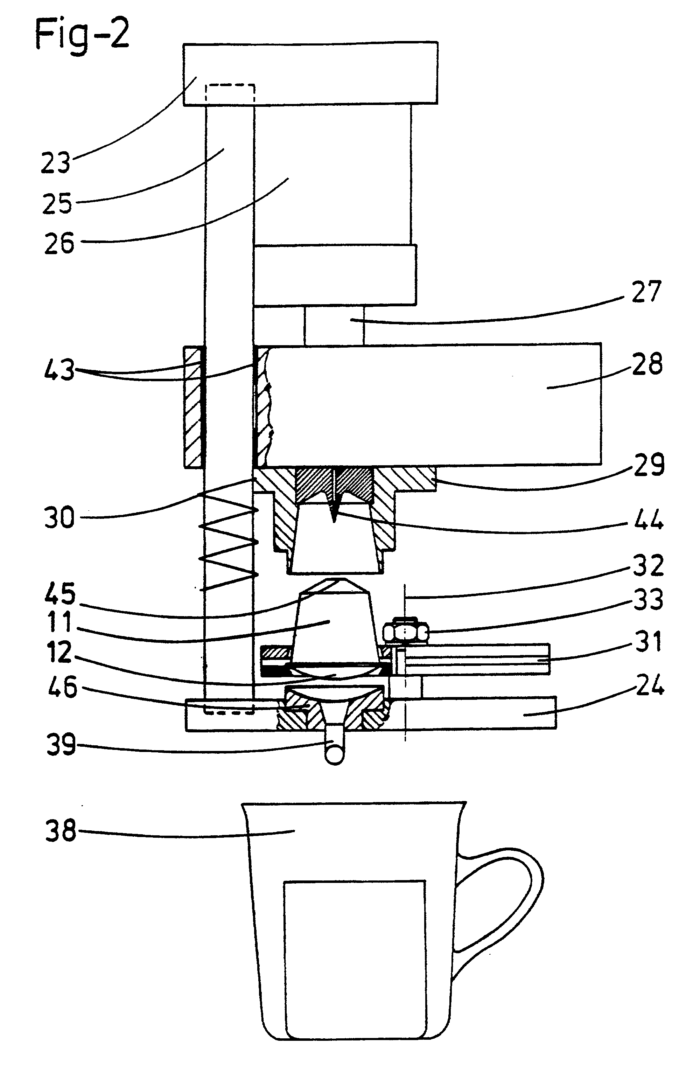

Le carrousel (31) est solidaire du plateau (24) et fixé sur ledit plateau à l'aide d'un boulon (33). Il tourne autour d'un axe (32) grâce à un moteur (34) et un système de roue dentée (35) et comporte trois logements (36) dans lesquels se logent les cartouches (11) à extraire. On prévoit en outre un guide (37) pour éviter une sortie de la capsule à extraire lors de la rotation du carrousel (31). Pour des raisons de simplification, on n'a pas représenté sur la fig 2 l'intérieur du système de chauffage (28). Comme déjà mentionné ci-dessus, ce système de chauffage est un système à chauffage instantané avec lequel on peut prérégler la température d'eau qu'on souhaite recevoir dans la tasse (38). Le plateau (24) comporte finalement un conduit (39) pour la réception de la boisson préparée.

Les éléments du dispositif selon l'invention ayant été décrits, nous allons maintenant décrire son fonctionnement depuis la sélection de la boisson à confectionner jusqu'à son obtention dans le récipient (38). Comme le dispositif comprend une pluralité de magasins (6), on peut charger dans lesdits magasins des cafés différents et ainsi choisir parmi plusieurs sortes de café. Les magasins (6) ayant été chargés en cartouches, on sélectionne le type de boisson souhaité. Les chaînes (13) mues par leur moteur entraînent les magasins (6) dans un déplacement vertical jusqu'à ce que le magasin contenant le café souhaité se trouve en position basse (a) (fig 3). On arrive avec ce magasin (6) à un positionnement correct grâce à la roue (21) qui vient se loger dans le logement prévu à cet effet sur la came de positonnement (20). Cette came (20) est montée sur des ressorts (40) (fig 4). Lorsque la roue (21) est bien positionnée, la bande transporteuse (17) solidaire de la came (20) va appuyer grâce au ressort (40) sur toute la longueur du magasin contre les capsules (11) présentes dans ledit magasin. Les bordures (41) (fig 3) des capsules sont poussées vers le haut dans les logements (42) en forme de U. Ces logements (42) constituent la glissière du magasin et le système de retenue des cartouches. La bande transporteuse se met alors en mouvement pour amener la cartouche (b) (fig 4) dans le logement correspondant (36) du carrousel (31). La bande transporteuse (17) ayant positionné la cartouche est arrêtée par une barrière optique et un signal est transmis au moteur (34) pour qu'il fasse tourner le carrousel (31) jusqu'à la position d'extraction de la cartouche. Pour l'extraction, la description est faite en relation avec la figure 2. Le cylindre (26) actionne le piston (27) qui déplace le système de chauffage (28) ainsi que le mécanisme d'extraction (29) vers le bas. La partie gauche de la figure 1 montre le dispositif en position d'extraction. Le système de chauffage (28) glisse sur le guide (25) par des coussinets (43). Le corps de chauffage (28) est alimenté en eau par un tuyau flexible (non représenté) à partir de derrière le panneau vertical (22). L'eau chaude dont la quantité est préréglée grâce à un débitmètre (non représenté) arrive par un organe d'injection (44) qui perfore le sommet tronconique (45) de la cartouche. Le mécanisme d'extraction (29) a une forme intérieure telle qu'il épouse la forme extérieure de la cartouche à extraire (11). Lorsque l'organe d'injection (44) a perforé la cartouche, l'eau chaude est envoyée sous pression. La pression peut être relativement élevée et atteindre environ 16 bars. Comme déjà mentionné dans le brevet CH 605 293, cette pression a tout d'abord pour effet de dilater la membrane (12) et finalement de la rompre le long de sa ligne d'affaiblissement. On provoque ainsi l'ouverture franche de l'opercule, par lequel la boisson s'écoule par le conduit (39) dans le récipient (38). Lors de l'extraction la face (46) du plateau (24) épouse sensiblement la forme de la membrane (45) de la cartouche (11) à extraire. Lorsque le système de chauffage a chauffé et laissé couler la quantité préréglée de liquide à travers la cartouche, le ressort (30) du guide (25) repousse l'ensemble vers le haut. Le moteur (34) entraîne alors le carrousel (31) dans la position d'éjection de la cartouche qui tombe dans une poubelle.

La machine à café automatique est prête pour une nouvelle sélection de café. La cartouche à extraire peut être d'un autre type que celle du brevet suisse précité. Il suffit alors de changer la tête d'extraction (29) et d'adapter éventuellement le magasin (6) d'amenée des cartouches. Avec le dispositif selon la figure 1, on peut bien entendu préparer deux tasses de café à la fois. On peut également prévoir sur le dispositif selon l'invention des moyens pour visualiser l'absence de cartouches dans un magasin ou même pour indiquer numériquement combien il reste de cartouches dans le magasin dont on est en train de positionner une cartouche.

La description est faite avec le café comme exemple. Il est également possible avec l'appareil selon l'invention de préparer des boissons à partir de mélanges café/chicorée et autres succédanés ou avec de la chicorée seule.

Il est également possible de prévoir des moyens pour suivre la consommation de cartouches par jour ou par mois.

**Revendications**

1. Appareil pour la confection automatique d'une boisson à partir d'une cartouche contenant le produit à extraire, comportant une pompe (16) pour amener un liquide, un système de chauffage (28) dudit liquide et un mécanisme d'extraction (29), au moins un ensemble de magasins (6) prévus pour loger les cartouches à extraire, lesdites cartouches étant déplaçables dans lesdits magasins, au moins une bande transporteuse (17) agencée de manière à faire avancer la cartouche choisie pour la positionner, l'appareil étant caractérisé en ce que chaque magasin est muni de glissières (6) entre lesquelles sont disposées les cartouches à extraire, celles-ci étant librement déplaçables en translation le long des glissières, ladite bande transporteuse (17) étant disposée sous un magasin et en contact avec les cartouches dudit magasin de manière à faire avancer celles-ci et en ce que l'appareil comprend au moins un carrousel (31) coopérant avec et disposé devant ledit magasin (6) et ladite bande transporteuse (17) et constitué par une roue (31) à trois logements correspondant aux trois positions de la cartouche à extraire, à savoir son positionnement, son extraction et son éjection, ladite cartouche coopérant dans sa seconde position avec le mécanisme d'extraction (29) pour délivrer la boisson dans un récipient disposé en dessous.

2. Appareil selon la revendication 1, caractérisé en ce que les magasins (6) à glissières sont horizontaux et mobiles à translation verticale grâce à un système à chaînes sans fin (13), en ce que la bande transporteuse (17) est à translation horizontale et disposée sous le magasin inférieur de l'ensemble de magasins et en ce que le carrousel (31) tourne autour d'un axe vertical.

3. Appareil selon l'une des revendications 1 ou 2, caractérisé en ce que le mécanisme d'extraction (29) est solidaire du système de chauffage (28) et déplaçable en translation verticale grâce à un cylindre à piston (26, 27).

4. Appareil selon la revendication 3, caractérisé en ce que le système de chauffage (28) est un système à chauffage continu, dont on peut prérégler la température du liquide à chauffer.

5. Appareil selon la revendication 1, caractérisé en ce qu'il comporte au moins une fenêtre de chargement sur sa partie supérieure.

6. Appareil selon l'une des revendications 1 ou 3, caractérisé en ce que le mécanisme d'extraction a une forme intérieure qui épouse sensiblement la forme externe de la cartouche à extraire.

7. Appareil selon l'une des revendications 1 ou 2, caractérisé en ce que la bande transporteuse est solidaire d'une came de positionnement, dans le logement de laquelle vient se placer la roue de positionnement du magasin dont on souhaite extraire une cartouche.

8. Appareil selon l'une des revendications 1 ou 2, caractérisé en ce qu'il comprend entre 2 et 6 ensembles de magasins (6) à glissière, entre 2 et 6 bandes transporteuses (17) et entre 2 et 6 carrousels (31), chaque ensemble de magasins, bande transporteuse et carrousel coopérant ensemble.

**Patentansprüche**

1. Vorrichtung zum automatischen Herstellen eines Getränkes, ausgehend von einer Kapsel, die das zu extrahierende Produkt enthält, mit einer Pumpe (16) zum Zuführen einer Flüssigkeit, einem System (28) zum Erhitzen der Flüssigkeit und einem Extrahiermechanismus (29), wobei zumindest eine Anordnung von Magazinen (6) zur Aufnahme der zu extrahierenden Kapseln vorgesehen ist, wobei die Kapseln in den Magazinen mittels zumindest eines Transportbandes (17) bewegbar sind, das derart ausgebildet ist, daß es die gewählte Kapsel zur Positionierung vorschiebt, wobei die Vorrichtung dadurch gekennzeichnet ist, daß jedes Magazin mit Gleitschienen (6) ausgestattet ist, zwischen denen die zu extrahierenden Kapseln angeordnet sind, die entlang der Gleitschienen in eine freie Translationsbewegung versetzbar sind, wobei das Transportband (17) unter einem Magazin und in Berührung mit den Kapseln dieses Magazines derart angeordnet ist, daß es diese in Bewegung versetzt, und daß die Vorrichtung zumindest ein Karussell (31) aufweist, das mit dem Magazin (6) und dem Transportband (17) zusammenwirkt und vor diesen angeordnet sowie durch ein Rad (31) mit drei Aufnahmen entsprechend den drei Positionen der zu extrahierenden Kapsel gebildet ist, nämlich ihrer Positionierung, ihrer Extrahierung und ihres Auswerfens, wobei die Kapsel in ihrer zweiten Position mit dem Extrahiermechanismus (29) zusammenwirkt, um das Getränk in einen darunter angeordneten Behälter abzugeben.

2. Vorrichtung nach Anspruch 1, dadurch gekennzeichnet, daß die Magazine (6) mit Gleitschienen horizontal angeordnet und mittels eines Systems endloser Ketten (13) in eine vertikale Translationsbewegung versetzbar sind, daß das Transportband (17) in eine horizontale Translationsbewegung versetzbar und unterhalb des unteren Magazins der Anordnung von Magazinen angeordnet ist, und daß das Karussell (31) um eine vertikale Achse dreht.

3. Vorrichtung nach Anspruch 1 oder 2, dadurch gekennzeichnet, daß der Extrahiermechanismus (29) mit dem Heizsystem (28) verbunden und durch einen mit einem Kolben versehenen Zylinder (26, 27) in eine vertikale Translationsbewegung versetzbar ist.

4. Vorrichtung nach Anspruch 3, dadurch gekennzeichnet, daß das Heizsystem (28) ein kontinuierliches Heizsystem ist, bei welchem die Temperatur der zu heizenden Flüssigkeit voreinstellbar ist.

5. Vorrichtung nach Anspruch 1, dadurch gekennzeichnet, daß sie an ihrem oberen Teil zumindest ein Ladefenster aufweist.

6. Vorrichtung nach Anspruch 1 oder 2, dadurch gekennzeichnet, daß der Extrahiermechanismus eine Innenform hat, welche der Außenform der zu extrahierenden Kapsel im wesentlichen angepaßt ist.

7. Vorrichtung nach Anspruch 1 oder 2, dadurch gekennzeichnet, daß das Transportband mit einem Positioniernocken verbunden ist, in dessen Ausnehmung das Positionierrad des Magazins angeordnet ist, aus dem man eine Kapsel herauszuziehen wünscht.

8. Vorrichtung nach Anspruch 1 oder 2, dadurch gekennzeichnet, daß sie zwischen zwei und sechs Magazinanordnungen (6) mit Gleitschienen, zwischen zwei und sechs Transportbänder (17) und zwischen zwei und sechs Karussells (31) aufweist, wobei jede Magazinanordnung, jedes Transportband und jedes Karussell zusammenwirken.

**Claims**

1. A machine for the automatic preparation of beverage from a cartridge containing the product to be extracted, comprising a pump (16) for delivering a liquid, a system (28) for heating said liquid and an extraction mechanism (29), at least one assembly of slide magazines (6) for housing the cartridges to be extracted, said cartridges being freely displaceable in said magazines, at least one conveyor belt (17) arranged so as to advance the cartridge selected in order to position it, said machine being characterized in that each magazine comprises slides (6) between which are disposed the cartridges to be extracted, these being freely displaceable in translation along the slides, said conveyor belt (17) being arranged below a magazine and in contact with the cartridges of said magazine so as to advance them and in that the machine comprises at least one distributor (31) co-operating with and arranged in front of said magazine (6) and said conveyor belt (17) and consisting of a wheel (31) with three recesses corresponding to the three positions of the cartridge to be extracted, namely its positioning, its extraction and its ejection, said cartridge co-operating in the second position with the extraction mechanism (29) to deliver the beverage into a receptacle arranged underneath.

2. A machine as claimed in Claim 1, characterized in that the slide magazine; (6) are horizontal and are vertically displaceable by an endless chain system (13), in that the conveyor belt (17) advances horizontally and is arranged below the lower magazine of the magazine assembly and in that the distributor (31) rotates about a vertical shaft.

3. A machine as claimed in Claim 1 or 2, characterized in that the extraction mechanism (29) is integral with the heating system (28) and is vertically displaceable by a piston and cylinder (26, 27).

4. A machine as claimed in Claim 3, characterized in that the heating system (28) is a continuous heating system in which the temperature of the liquid to be heated may be pre-adjusted.

5. A machine as claimed in Claim 1, characterized in that it comprises at least one loading window in its upper part.

6. A machine as claimed in Claim 1 or 3, characterized in that the interior of the extraction mechanism is shaped to correspond substantially with the exterior shape of the cartridge to be extracted.

7. A machine as claimed in Claim 1 or 2, characterized in that the conveyor belt is integral with a positioning cam in the recess of which engages the positioning wheel of the magazine from which it is desired to remove a cartridge.

8. A machine as claimed in Claim 1 or 2, characterized in that it comprises from two to six assemblies of slide magazines (6), from two to six conveyor belts (17) and from two to six distributors (31), each magazine assembly, conveyor belt and distributor co-operating with one another.

# Fig -1

Fig-2

Fig-3

6

11

14

15

6

11

12

13

14

15

6

(a)

11

42

41

17

# Fig-4

(b)

21    40

18        19    17    18    20